# EUROPÄISCHE PATENTANMELDUNG

(11) **EP 0 878 502 A2**
(43) Veröffentlichungstag der Anmeldung: **18.11.1998**
(21) Anmeldenummer: 98810372.7
(22) Anmeldetag: 28.04.1998
(51) Int. Cl.: C08K 5/00

(54) **Formulierungen von Vitamin E zur Stabilisierung von polymeren organischen Materialien**

(30) Priorität: 05.05.1997 CH 1042/97
(71) Anmelder: Ciba Specialty Chemicals Holding Inc., 4057 Basel (CH)
(72) Erfinder: Pitteloud, Rita, 1724 Praroman (CH); Kröhnke, Christoph, 79206 Breisach (DE)

(57) **Zusammenfassung**

Die Erfindung betrift eine Zusammensetzung, enthaltend A) ein organisches polymeres Material und B) ein Stabilisatorengemisch, bestehend b1) aus α-Tocopherol, b2) aus einer festen Polyhydroxyverbindung, welche ausgewählt wird aus der Gruppe bestehend aus Triglycerin, Ditrimethylolpropan, Dipentaerythritol, Tripentaerythritol, D-Mannitol, D-Sorbitol und Xylitol oder b3) aus einem Säure bindenden Material oder einer Mischung aus den Bestandteilen b2) und b3). Weitere Gegenstände der Erfindung sind das Stabilisatorgemisch B) sowie dessen Verwendung zur Stabilisierung von polymeren Materialien insbesondere Lebensmittelverpackungen.

## Beschreibung

Die Erfindung betrifft eine Zusammensetzung welche A) ein polymeres Material, B) eine Stabilisatormischung aus α - Tocopherol, eine feste Polyhydroxyverbindung und/oder eine Säure bindende Verbindung enthält. Weitere Gegenstände der Erfindung sind die Stabilisatormischung als solche sowie deren Verwendung zur Stabilisierung von Polymeren, insbesondere von Lebensmittelverpackungen.

Die Stabilisierung von Polymeren wie z. B. Polyethylen oder Polypropylen mit Vitamin E (α - Tocopherol) ist seit langem bekannt und zum Beispiel in der WO 90/07547 beschrieben. Ein Nachteil dieses Stabilisators ist die Farbentwicklung, die bei höheren Temperaturen auftritt.

Die Verringerung dieser Verfärbung durch α - Tocopherol, insbesondere der Vergilbung während der Verarbeitungsschritte, wurde mit einer Reihe von Polyhydroxyverbindungen in der WO 93/10175 beschrieben.

Nachteilig bei den dort erwähnten Polyhydroxyverbindungen ist, dass es sich um flüssige oder niedrig schmelzende Verbindungen handelt, die zusammen mit α - Tocopherol, welches selbst ein öliges Material mit einem Schmelzpunkt von 2,5-3,5° C ist, eine ölige bis schmierig pastöse Zusammensetzung ergeben.

Solche Öle oder Pasten sind jedoch für die Einarbeitung in zum Beispiel Polymergranulate nur schlecht geeignet, da sie an den Wandungen der Vorrats- und Mischbehälter kleben bleiben. Beim Extrudieren kann es dadurch zu inhomogenen Verteilungen kommen.

Aus anwendungstechnischer Sicht besteht daher das Bedürfnis, eine feste Stabilisatorzusammensetzung ohne irgendwelche Trägerstoffe zu haben, die auf einfache Weise dem Polymer zugefügt und extrudiert werden kann.

Die vorliegende Erfindung stellt solche Stabilisatorgemische bereit, die mit organischen polymeren Materialien feste Zusammensetzungen ergeben, welche ohne im Extruder ölige Abscheidungen zu hinterlassen, verarbeitet werden können.

Die Durchmischung ist völlig homogen und es ergeben sich sehr gut gegen Hitze stabilisierte Polymere. Durch den Zusatz der ausgewählten Polyhydroxyverbindungen wird eine besonders niedrige Vergilbung während der thermischen Prozesse erreicht. Ein Ausschwitzen der Polyhydroxyverbindungen oder ein Verflüchtigen aufgrund eines niedrigen Dampfdruckes, ist bei diesen Verbindungen nicht zu befürchten. Da sie vollständig im Polymer enthalten bleiben, enffalten sie auch ihre volle Wirksamkeit.

Sie ergeben gegenüber bekannten flüssigen Polyhydroxyverbindungen ein besseres Farbverhalten nach thermischer Belastung.

Die so stabilisierten Polymeren eignen sich ganz besonders für Lebensmittelverpackungen.

Ein Gegenstand der Erfindung ist eine Zusammensetzung, enthaltend A) ein organisches polymeres Material und B) ein Stabilisatorengemisch, bestehend b1) aus α-Tocopherol, b2) aus einer festen Polyhydroxyverbindung, welche ausgewählt wird aus der Gruppe bestehend aus Triglycerin, Ditrimethylolpropan, Dipentaerythritol, Tripentaerythritol, D-Mannitol, D-Sorbitol und Xylitol oder b3) aus einem Säure bindenden Material oder einer Mischung aus den Bestandteilen b2) und b3).

Die Strukturformeln der Polyhydroxyerbindungen sind nachstehend angegeben.

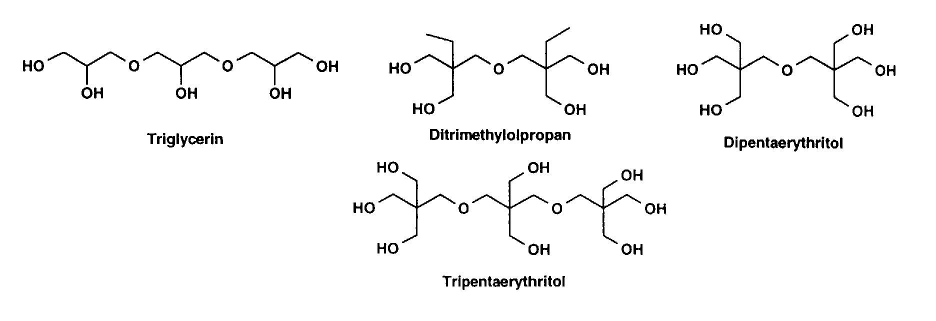

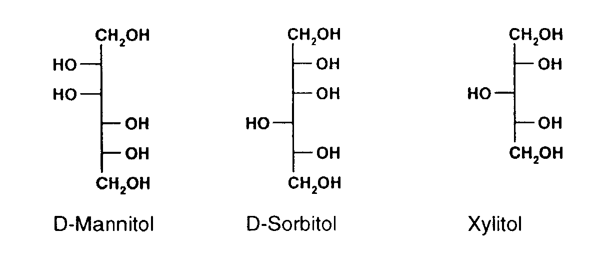

Beispiele für polymere Materialien sind nachfolgend angegeben.
1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(lll)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen la, lla und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-lsobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-lsopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und-methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-lsopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylenisophthalamid. Block-Copolymere der vorstehend genanntenPolyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide, Polyetherimide, Polyesterimide, Polyhydantoine und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gsättigter und ungesättigter Dicarbonsäuren mit mehrwertigen Alkoholen, sowie Vinylverbindungen als Vemetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten, Urethan-acrylaten oder Polyester-acrylaten.
25. Alkydharze, Polyesterharze und Acrylatharze, die mit Melaminharzen, Harnstoffharzen, lsocyanaten, lsocyanuraten, Polyisocyanaten oder Epoxidharzen vernetzt sind.
26. Vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigern vernetzt werden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugt ist das polymere organische Material A) ein Polyolefin, Polystyrol, PVC, Polyamid, Polyacrylat oder Polyester. Besonders bevorzugt handelt es sich um ein Polyolefin, insbesondere Polyethylen oder Polypropylen

Bevorzugt ist die feste Polyhydroxyverbindung Ditrimethylolpropan, Dipentaerythritol oder Tripentaerythritol.

Die polymere Zusammensetzung kann zusätzlich zu oder anstelle von der Polyhydroxyverbindung b2) ein Säure bindendes Material enthalten

Als Säure bindendes Material wird bevorzugt ein Erdalkali- oder Zink Salz einer C₃-C₁₈-Carbonsäure, ein Erdalkali/Aluminium - carbonat, -hydroxyborat, -hydroxyphosphit oder ein Zeolith verwendet.

Besonders bevorzugt sind Erdalkali- oder Zn Salze einer C₃-C₁₈-Carbonsäure. Die Carbonsäure kann gesättigt oder ungesättigt, verzweigt oder unverzweigt sein. Bevorzugt handelt es sich um Monocarbonsäuren, die jedoch mit einer oder mehreren OH Grupen substituiert sein können.

Beispiele für gesättigte C₃-C₁₈ Carbonsäuren sind Propionsäure, Buttersäure, Valeriansäure, Capronsäure, Palmitinsäure, Stearinsäure, Laurinsäure oder Milchsäure.

Besonders bevorzugt sind Milchsäure, Laurinsäure und Stearinsäure.

Bevorzugt ist eine Zusammensetzung, enthaltend A) ein organisches polymeres Material und B) ein Stabilisatorengemisch, bestehend b1) aus α-Tocopherol und b2) aus einer festen Polyhydroxyverbindung, welche ausgewählt wird aus der Gruppe bestehend aus Triglycerin, Ditrimethylolpropan, Dipentaerythritol, Tripentaerythritol, D-Mannitol, D-Sorbitol und Xylitol.

Bevorzugt ist die Komponente b1) in einer Menge von 0,005 bis 2 Gew.-% bezogen auf das Polymer enthalten.

Bevorzugt ist die Komponente b2) in einer Menge von 0,005 bis 5 Gew.-% bezogen auf das Polymer enthalten.

Bevorzugt beträgt das Verhältnis b1) zu b2) von 10:1 bis 1:10.

Die Komponente b3) ist bevorzugt in einer Menge von 0,005 bis 5% bezogen auf das Polymer enthalten.

Neben den Komponenten b1) bis b3) können noch weitere handelsübliche Zusätze vorhanden sein.
1. Antioxidantien
   1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.
   1.2. Alkylthiomethylnhenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
   1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.
   1.4. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.
   1.5. Alkyliden-Bisphenole, z.B. 2,2'-Methylen-bis(6-tert-butyl-4-methylphenol), 2,2'-Methylen-bis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(a-methylbenzyl)-4-nonylphenol], 2,2'-Methylen-bis[6-(α,α-dimethylbenzyl)-4-nonylphenol], 4,4'-Methylen-bis(2,6-ditert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1 ,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis(3,5-dimethyl-2-hydroxyphenyl)-butan, 2,2-Bis(3,5-di-tert-butyl-4-hydroxyphenyl)propan, 2,2-Bis(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
   1.6. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-ditert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)sulfid, Isooctyl-3,5-di-tert-butyl-4-hydroxybenzyl-mercaptoacetat.
   1.7. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.
   1.8. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)-phenol.
   1.9. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tertbutyl-4-hydroxyphenoxy)-1,2,3-triazin, 1,3,5-Tris(3,5-di-tert-butyl-4-hydroxybenzyl)isocyanurat, 1,3,5-Tris(4-tert-butyl-3-hydroxy-2,6-dimethylbenzyl)-isocyanurat, 2,4,6-Tris(3,5-di-tert-butyl-4-hydroxyphenylethyl)-1,3,5-triazin, 1 ,3,5-Tris(3,5-di-tert-butyl-4-hydroxyphenylpropionyl)-hexahydro-1,3,5-triazin, 1 ,3,5-Tris(3,5-dicyclohexyl-4-hydroxybenzyl)isocyanurat.
   1.10. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
   1.11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
   1.12. Ester der β-(3,5-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.13. Ester der β-(5-tert-Butvl-4-hvdroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.14. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.15. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.16. Amide der β-(3,5-Di-tert-butyl-4-hydroxyphenyl)-propionsäure, wie z.B. N,N'-Bis(3,5-ditert-butyl-4-hydroxyphenylpropionyl)-hexamethylendiamin, N,N'-Bis(3,5-di-tert-butyl-4-hydroxyphenylpropionyl)-trimethylendiamin, N,N'-Bis(3,5-di-tert-butyl-4-hydroxyphenylpropionyl)-hydrazin.
   1.17. Ascorbinsäure (Vitamin C).
   1.18. Aminische Antioxidantien, wie z.B. N,N'-Di-isopropyl-p-phenylendiamin, N,N'-Di-secbutyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(naphthyl-2)-p-phenylendiamin, N-lsopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl--p-phenylendiamin, Diphenylamin, N-Allyldiphenylamin, 4-lsopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylamino-phenol, 4-Dodecanoylamino-phenol, 4-Octadecanoylamino-phenol, Di-(4-methoxyphenyl)-amin, 2,6-Di-tert-butyl-4-dimethylaminomethyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/lsohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethylpiperidin-4-on, 2,2,6,6-Tetramethylpiperidin-4-ol.
2. UV-Absorber und Lichtschutzmittel
   2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)benzotriazol, 2-(2'-Hydroxy-5'-(1,1,3,3-tetramethylbutyl)phenyl)-benzotriazol, 2-(3',5'-Di-tertbutyl-2'-hydroxyphenyl)-5-chlor-benzotriazol, 2-(3'-tert-Butyl- 2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, Mischung aus 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; [RCH₂CH₂COO(CH₂) 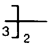 mit R = 3'-tert-Butyl-4'-hydroxy-5'-2H-benzotriazol-2-yl-phenyl.
   2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxypyrazols, gegebenenfalls mit zusätzlichen Liganden.
   2.6. Sterisch gehinderte Amine, wie z.B. Bis(2,2,6,6-tetramethyl-piperidin-4-yl)-sebacat, Bis(2,2,6,6-tetramethyl-piperidin-4-yl)-succinat, Bis(1,2,2,6,6-pentamethylpiperidin-4-yl)sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1 ,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis(1-octyloxy-2,2,6,6-tetramethylpiperidyl)-sebacat, Bis(1-octyloxy-2,2,6,6-tetramethylpiperidyl)-succinat, Kondensationsprodukt aus N,N'-Bis(2,2,6,6-tetramethyl-4-piperidyl)hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondenstionsprodukt aus N,N'-Bis(2,2,6,6-tetramethyl-4-piperidyl)hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro[4,5]decan und Epichlorhydrin.
   2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
   2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl )-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin.
3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N,N'-Diacetyl-adipinsäuredihydrazid, N,N'-Bis-salicyloyl-oxalsäure-dihydrazid, N,N'-Bis-salicyloyl-thiopropionsäure-dihydrazid.
4. Phosphite und Phosphonite, wie z.B. Triphenylphosphit, Diphenylalkylphosphite, Phenyldialkylphosphite, Tris(nonylphenyl)-phosphit, Trilaurylphosphit, Trioctadecylphosphit, Distearylpentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-lsooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis-(2,4-di-tert-butyl-6-methylphenyl)-methylphosphit, Bis(2,4-di-tert-butyl-6-methylphenyl)-ethylphosphit.
5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.
6. Nitrone wie z.B. N-Benzyl-alpha-phenyl-nitron, N-Ethyl-alpha-methyl-nitron, N-Octyl-alphaheptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecylalpha-heptadecyl-nitron, N-Ocatadecyl-alpha-pentadecyl-nitron, N-Heptadecyl-alphaheptadecyl-nitron, N-Octadecyl-alpha-hexadecyl-nitron, Nitrone abgeleitet von N,N-Dialkylhydroxylaminen hergestellt aus hydrierten Talgfettaminen.
7. Thiosynergisten wie z.B. Thiodipropionsäure-di-laurylester oder Thiodipropionsäure-distearylester.
8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.
9. Polyamidstabilisatoren, wie z.B. Kupfersalze in Kombination mit Jodiden und/oder Phosphorverbindungen und Salze des zweiwertigen Mangans.
10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkaliund Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.
11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("lonomere").
12. Füllstoffe und Verstärkungsmittel, wie z.B. Calciumcarbonat, Silikate, Glasfasern, Glaskugeln, Asbest, Talk, Kaolin, Glimmer, Bariumsulfat, Metalloxide und -hydroxide, Ruß, Graphit, Holzmehl und Mehle oder Fasern anderer Naturprodukte, synthetische Fasern.
13. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.
14. Benzofuranone bzw. Indolinone, wie z.B. in US-A-4325863, US-A-4338244, US-A-5175312, US-A-5216052, US-A-5252643, DE-A-4316611, DE-A-4316622, DE-A-4316876, EP-A-0589839 oder EP-A-0591102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzofuran-2-on, 3,3'-Bis[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.

Bevorzugt sind zusätzlich ein UV-Absorber oder ein sterisch gehindertes Amin oder beide vorhanden. Beispiele für UV-Absorber und sterisch gehinderte Amine sind vorstehend angegeben.

Ein weiterer Gegenstand der Erfindung ist ein Stabilisatorengemisch, bestehend b1) aus α-Tocopherol, b2) aus einer festen Polyhydroxyverbindung, welche ausgewählt wird aus der Gruppe bestehend aus Triglycerin, Ditrimethylolpropan, Dipentaerythritol, Tripentaerythritol, D-Mannitol, D-Sorbitol und Xylitol oder b3) aus einem Säure bindenden Material oder einer Mischung aus den Bestandteilen b2) und b3).

Für die Komponenten b1) bis b3) gelten die vorstehend angegebenen Bedeutungen einschliesslich ihrer Bevorzugungen.
Die Durchmischung des Stabilisatorengemisches kann mittels in der Technik üblichen Geräten wie Mischern, Knetern oder ähnlichem vorgenommen werden

Es ist auch möglich, die Komponenten ganz oder teilweise aufzuschmelzen oder in einem Lösungsmittel zu lösen, und durch Versprühen, Pulver oder Granulate herzustellen. Falls nicht schmelzbare oder nicht lösliche Komponenten vorhanden sind, so können diese der Schmelze einfach zugerührt werden.

Geeignete Lösungsmittel sind Ether, Ester, Ketone, Amide oder Kohlenwasserstoffe.

Die Mischung des Stabilisatorgemisches mit dem Polymeren kann beispielsweise durch Einmischen der Verbindungen und gegebenenfalls weiterer Additive nach den in der Technik üblichen Methoden erfolgen. Die Einarbeitung kann vor oder während der Formgebung erfolgen. Die Komponenten können zusammen oder in beliebiger Reihenfolge zugesetzt werden.

Die Komponenten können auch in Form eines Masterbatches, der diese beispielsweise in einer Konzentration von 2,5 bis 25 Gew.-% enthält, den zu stabilisierenden Kunststoffen zugesetzt werden.
Zweckmäßig kann die Einarbeitung der Komponenten nach folgenden Methoden erfolgen:
- als Trockenmischung während des Vermischens von Zusatzkomponenten oder Polymermischungen,
- durch direktes Zugeben in die Verarbeitungsapparatur (z. B. Extruder, Innenmischer Kneter, Dreiwalzenstühle, Kalander und ähnliches).
Bevorzugt erfolgt die Zugabe direkt in die Verarbeitungsapparatur, wobei auf diese Weise entweder Masterbatches oder die bereits fertigen Polymerzusammensetzungen hergestellt werden können.

Erfindungsgemäße Polymerzusammensetzungen können in verschiedener Form angewendet bzw. zu verschiedenen Produkten verarbeitet werden, z. B. als (zu) Folien, Fasern, Bändchen, Formmassen oder Profilen.

Weitere Gegenstände der Erfindung sind die Verwendung eines Stabilisatorengemisches B) zur thermischen Stabilisierung von organischen Polymeren insbesondere zur thermischen Stabilisierung von Lebensmittelverpackungen.

Die nachfolgenden Beispiele erläutern die Erfindung.

Beispiele A Herstellung der Stabilisatorenmischungen

### Beispiel A1: Herstellung der Mischung 101

Zu 5g einer 20 %igen Lösung von Vitamin E in Essigester werden 4 g Ditrimethylolpropan zugegeben. Die erhaltene Suspension wird während 2 Stunden bei Raumtemperatur gerührt. Anschliessend wird das Lösungsmittel abgedampft und der feste Rückstand am Hochvakuum getrocknet.

5 g der Mischung 101 werden als weisses (off- white) Pulver erhalten.

### Beispiel A2: Herstellung der Mischung 102

4 g Ditrimethylolpropane und 1 g Vitamin E werden am Kugelrohr bei 150°C zusammen geschmolzen und während 30 Minuten bei dieser Temperatur gedreht.
Nach Abkühlen auf Raumtemperatur wird der feste Rückstand gemahlen. 5 g hellgelbes Pulver werden erhalten.

Die Mischungen 103-108 werden nach dem in Beispiel 1 beschriebenen Verfahren hergestellt.

### Beispiel A3: Herstellung der Mischung 109

Eine Lösung von 1 g Vitamin E und 3g Ditrimethylolpropan in einer Mischung aus 40 ml Essigester und 10 ml Methanol wird während 2 Stunden bei Raumtemperatur gerührt. Die Lösungsmittel werden abdestilliert und der feste Rückstand am Hochvakuum getrocknet. Es werden 4 g der Mischung 109 als weisses (off-white) Pulver erhalten.
Die Mischung 110 bis 114 werden wie in Beispiel 3 beschrieben erhalten.

### Beispiel A4: Herstellung der Mischung 115

1 g Vitamin E wird in 50 ml Esssigester gelöst. 5 g Calciumstearat wird in einer Portion zugegeben. Die erhaltene Suspension wird während 2 Stunden bei Raumtemperatur gerührt. Das Lösungsmittel wird abgedampft und der Rückstand am Hochvakuum getrocknet. Es werden 6 g der Mischung 115 als weisses Pulver isoliert.

Die Mischungen 116-126 werden nach dem in Beispiel 4 beschriebenen Verfahren erhalten.

### Beispiel A5: Herstellung der Mischung 130

Zu einer Lösung von Vitamin E (1 g) in 40 ml Essigester wird eine Lösung von 4 g Ditrimetholpropan in 18 ml Methanol und 5 g Calciumstearat zugegeben. Die erhaltene Suspension wird während 2 Stunden bei Raumtemperatur gerührt. Anschliessend werden die Lösungsmittel abdestilliert und der feste Rückstand am Hochvakuum getrocknet. Es werden 10 g der gewünschten Mischung 130 als weisses Pulver erhalten.

Die Mischungen 127-129 und 131-133 werden wie in Beispiel 4 beschrieben hergestellt.

Die Schmelzpunkte der verschiedenen Mischungen sind in Tabelle 1, 2 und 3 aufgeführt.

**Tabelle 1**

| Vitamin E / feste Polyhydroxyverbindungen (Farbverbesserer) | | | |
|---|---|---|---|
| Mischung | Farbverbesser | Verhältnis Farbverb. : Vit E | Smp °C |
| 101 | Ditrimethylolpropan | 4:1 | 107 |
| 102 | Ditrimethylolpropan | 4:1 | 107 |
| 103 | Dipentaerythrit | 4:1 | 221 |
| 104 | Dipentaerythrit | 3:1 | 185-218 |
| 105 | Tripentaerythrit | 4:1 | 238 |
| 106 | Mannitol | 4:1 | 171 |
| 107 | Sorbitol | 4:1 | 97 |
| 108 | Ditrimethylolpropan | 3:1 | 107-110 |
| 109 | Ditrimethylolpropan | 2:1 | 103 |
| 110 | Ditrimethylolpropan | 1:1 | 107-109 |
| 111 | Mannitol | 3:1 | 165-167 |
| 112 | Sorbitol | 3:1 | 96 |
| 113 | Sorbitol | 2:1 | 92-95 |

**Tabelle 2**

| Vitamin E / Säurefänger Mischungen | | | |
|---|---|---|---|
| Mischung | Säurefänger | Verhältnis Säurefänger:Vit E | Smp°C |
| 115 | Calciumstearat | 5:1 | >280 |
| 116 | Calciumstearat | 3:1 | 210 |
| 117 | Zinkstearat | 5:1 | 117 |
| 118 | Zinkstearat | 3:1 | 108 |
| 119 | DHT | 5:1 | >280 |
| 120 | DHT | 3:1 | >280 |
| 121 | ZHT | 5:1 | >280 |
| 122 | Pationic 1230® | 3:1 | 183-194 |
| 123 | Pationic 1240® | 5:1 | 225 |
| 124 | Bäropol 6180® | 5:1 | >280 |
| 125 | Bäropol 6090® | 5:1 | >280 |
| 126 | Bäropol 6190® | 5:1 | >280 |

**Tabelle 3**

| Vitamin E / Farbverbesserer / Säurefänger | | | |
|---|---|---|---|
| Verhältniss: 1:4:5 | | | |
| Mischung | Farbverbesserer | Säurefänger | Smp°C |
| 127 | Triglycerin | Calciumstearat | 110 |
| 128 | Dipentaerythrit | Calciumstearat | 290 |
| 129 | Tripentaerythrit | Calciumstearat | >280 |
| 130 | Ditrimethylolpropan | Calciumstearat | 115 |
| 131 | Ditrimethylolpropan | Pationic 1230® | 155-206 |
| 132 | Sorbitol | Pationic 1230® | 96-187 |
| 133 | Ditrimethylolpropan | Pationic 1240® | 235 |
| Pationic 1230®, Pationic 1240® , Calciumlactat der Fa. PHT Co., Kansas City | | | |
| Bäropol MC 6180®, basisches Magnesium-Aluminiumcarbonat der Fa.Bärlocher GmbH, München. | | | |
| Bäropol MC 6190®, basisches Calcium-Aluminiumhydroxyborat der Fa. Fa.Bärlocher GmbH, München. | | | |
| Bäropol MC 6090®, basisches Calcium-Aluminiumhydroxyphosphit der Fa. Fa.Bärlocher GmbH, München. | | | |

### Beispiele B Anwendungsbeispiele

### Beispiel B1: HD-Polyethylen

100 Gewichtsteile unstabilisiertes HD-Polyethylen (PE-HD; Eltex A 60-70 der Fa. Solvay) werden mit 0.05 Teilen Calciumstearat sowie nachstehend angegebenen Teilen Stabilisatormischung der Tabelle 1 2 Minuten lang trocken vermischt. Die Mischung wird anschliessend in einen Einschnecken-Extruder (Schwabenthan) der Dimensionierung D25 mm L/D=20 eingetragen, der mit 40 Umdrehungen pro Minute betrieben wird. Hierbei beträgt die Temperatur am Einzug 220°C, in Zone 2 230°C, in Zone 3 240°C sowie in Zone 4 (Düse) ebenfalls 240°C. Der Austrag des extrudierten Materials erfolgt über eine Strang-Düse mit Abkühlung des Strangs in einem Wasserbad und nachfolgender Granulierung mittels eines Stranggranulators. Die so beschriebene Extrusion wird fünfmal unter identischen Bedingungen vorgenommen, wobei jeweils von der ersten, dritten und fünften Extrusion je ein Muster für die Schmelzfluss- und die Gelbwertmessung entnommen wird. Die Gelbwertmessung wird in einem zur Remissionsmessung geeigneten Spektralphotometer mit Normlicht C, UV-Filter, Glanzfalle und einem Detektor bei 2° gegen den Primärstandard Bariumsulfat (weiss, 100 % Remission) und gegen den Sekundärstandard, eine Keramikplatte (84% Remission) nach ASTM D1925 gemessen.
Die Messung des Schmelzwertes (MFR) erfolgt nach ISO 1163. Die Ergebnisse sind in Tabelle 4 dargestellt.

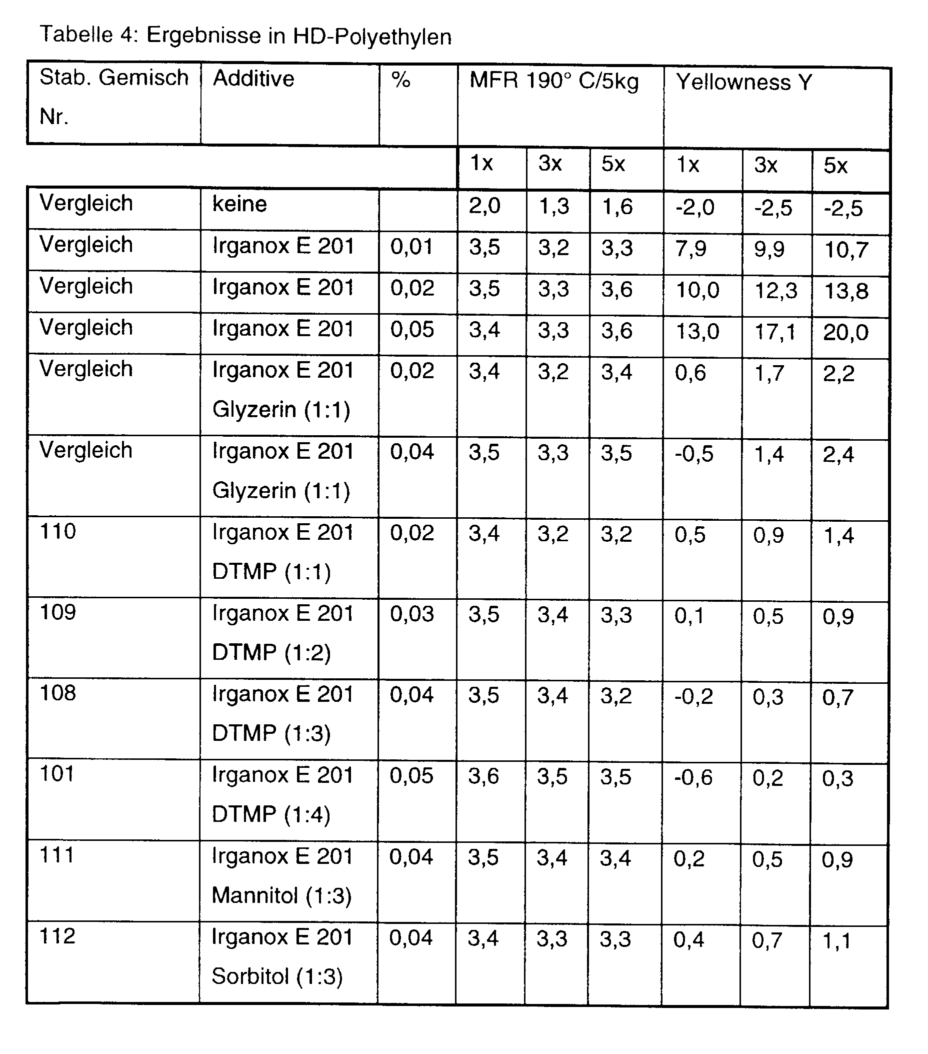

### Beispiel B2: LLDPE-Polvethylen

Man verfährt wie in Beispiel B1 angegeben mit dem Unterschied, dass anstelle von HDPE LLDPE verwendet wird (Polyethylen LLD, LL 0209 AP der Fa BP Chemicals). Die Ergebnisse sind in Tabelle 5 dargestellt

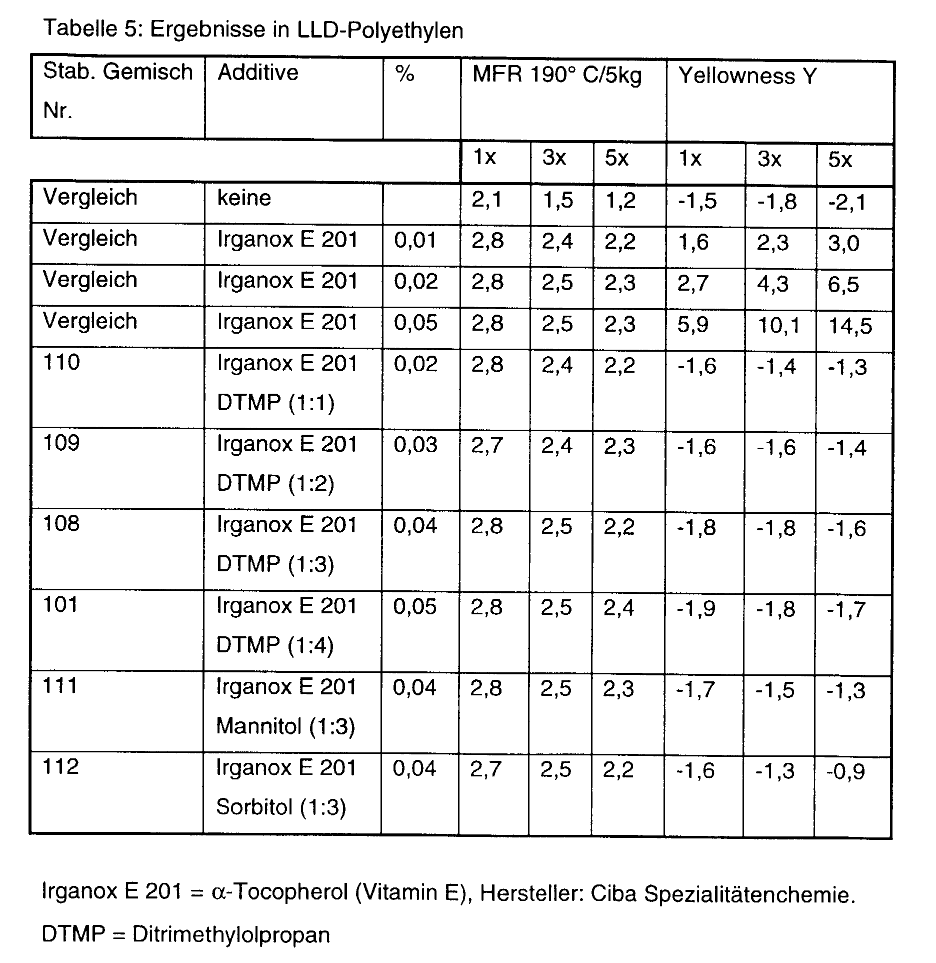

Die Nummern der Stabilisatorgemische beziehen sich auf die in den Tabellen 1-3 angegebenen Gemische. Die Prozentangaben sind Gewichtsprozent und beziehen sich auf das Polymer.

## Patentansprüche

1. Zusammensetzung, enthaltend A) ein organisches polymeres Material und B) ein Stabilisatorengemisch, bestehend b1) aus α-Tocopherol, b2) aus einer festen Polyhydroxyverbindung, welche ausgewählt wird aus der Gruppe bestehend aus Triglycerin, Ditrimethylolpropan, Dipentaerythritol, Tripentaerythritol, D-Mannitol, D-Sorbitol und Xylitol oder b3) aus einem Säure bindenden Material oder einer Mischung aus den Bestandteilen b2) und b3).

2. Zusammensetzung nach Anspruch 1, enthaltend als polymeres organisches Material A) ein Polyolefin, Polystyrol, PVC, Polyamid, Polyacrylat oder Polyester.

3. Zusammensetzung nach Anspruch 2, enthaltend als polymeres organisches Material A) ein Polyolefin.

4. Zusammensetzung nach Anspruch 1, enthaltend als feste Polyhydroxyverbindung Ditrimethylolpropan, Dipentaerythritol, Tripentaerythritol.

5. Zusammensetzung nach Anspruch 1, enthaltend als Säure bindendes Material ein Erdalkali- oder Zink Salz einer C₃-C₁₈-Carbonsäure, ein Erdalkali/Aluminium - carbonat, -hydroxyborat, -hydroxyphosphit oder ein Zeolith.

6. Zusammensetzung nach Anspruch 1, enthaltend A) ein organisches polymeres Material und B) ein Stabilisatorengemisch, bestehend b1) aus α-Tocopherol und b2) aus einer festen Polyhydroxyverbindung, welche ausgewählt wird aus der Gruppe bestehend aus Triglycerin, Ditrimethylolpropan, Dipentaerythritol, Tripentaerythritol, D-Mannitol, D-Sorbitol und Xylitol.

7. Zusammensetzung nach Anspruch 1, welche zusätzlich einen UV-Absorber oder ein sterisch gehindertes Amin oder beide enthält.

8. Zusammensetzung nach Anspruch 1, worin die Komponente b1) in einer Menge von 0,005 bis 2 Gew.-%, bezogen auf das Polymer A) enthalten ist.

9. Zusammensetzung nach Anspruch 1, worin die Komponente b2) in einer Menge von 0,005 bis 5 Gew.-%, bezogen auf das Polymer A) enthlten ist.

10. Zusammensetzung nach Anspruch 1, worin das Verhältnis b1) zu b2) von 10:1 bis 1:10 beträgt.

11. Zusammensetzung nach Anspruch 1, worin die Komponente b3) in einer Menge von 0,005 bis 5 Gew.-%, bezogen auf das Polymer A) enthalten ist.

12. Stabilisatorengemisch, bestehend b1) aus α-Tocopherol, b2) aus einer festen Polyhydroxyverbindung, welche ausgewählt wird aus der Gruppe bestehend aus Triglycerin, Ditrimethylolpropan, Dipentaerythritol, Tripentaerythritol, D-Mannitol, D-Sorbitol und Xylitol oder b3) aus einem Säure bindenden Material oder einer Mischung aus den Bestandteilen b2) und b3).

13. Verwendung eines Stabilisatorengemisches nach Anspruch 12 zur thermischen Stabilisierung von organischen Polymeren.

14. Verwendung eines Stabilisatorengemisches nach Anspruch 12 zur thermischen Stabilisierung von Lebensmittelverpackungen.
